# EUROPEAN PATENT APPLICATION

(11) **EP 4 578 640 A1**
(43) Date of publication of application: **02.07.2025**
(21) Application number: 23307421.0
(22) Date of filing: 29.12.2023
(51) Int. Cl.: B29D 11/00, B23Q 7/04, B25J 15/00, B25J 15/06, B24B 13/005, B65G 47/91, G03F 7/00, B24B 41/06

(54) **A DEVICE AND METHOD FOR MANIPULATING AN OPHTHALMIC LENS**

(71) Applicant: Essilor International, 94220 Charenton-Le-Pont (FR)
(72) Inventor: KRESS, Pierre, 92340 BOURG-LA-REINE (FR); MEYNEN, Mathieu, 94340 JOINVILLE-LE-PONT (FR); BELLY, Jean Francois, 94400 VITRY-SUR-SEINE (FR)
(74) Representative: Ipsilon

(57) **Abstract**

This device (12) for manipulating at least one ophthalmic lens (10) comprises a translational and rotational motion unit, movable in translation and in rotation according to three mutually orthogonal directions and a chuck (14) fixed on the translational and rotational motion unit. The chuck (14) comprises: a plurality of holders (16) movable in translation according to a direction orthogonal to a face of the at least one ophthalmic lens (10), at least one holder of the plurality of holders (16) being provided with a vacuum propagating element enabling that holder to grip the face of the at least one ophthalmic lens (10); and a plurality of holder control elements (18), each holder control element (18) being adapted to either impede, or allow translation movement of a holder of the plurality of holders (16).

## Description

### FIELD OF THE INVENTION

The present invention relates to a device and method for manipulating an ophthalmic lens.

### BACKGROUND OF THE INVENTION

For various applications, such as gluing a prescription on an electrochromic lens, or manufacturing a hybrid organic-mineral lens, it is necessary to accurately position an ophthalmic lens with respect to another one.

Such positioning should be performed for all degrees of freedom.

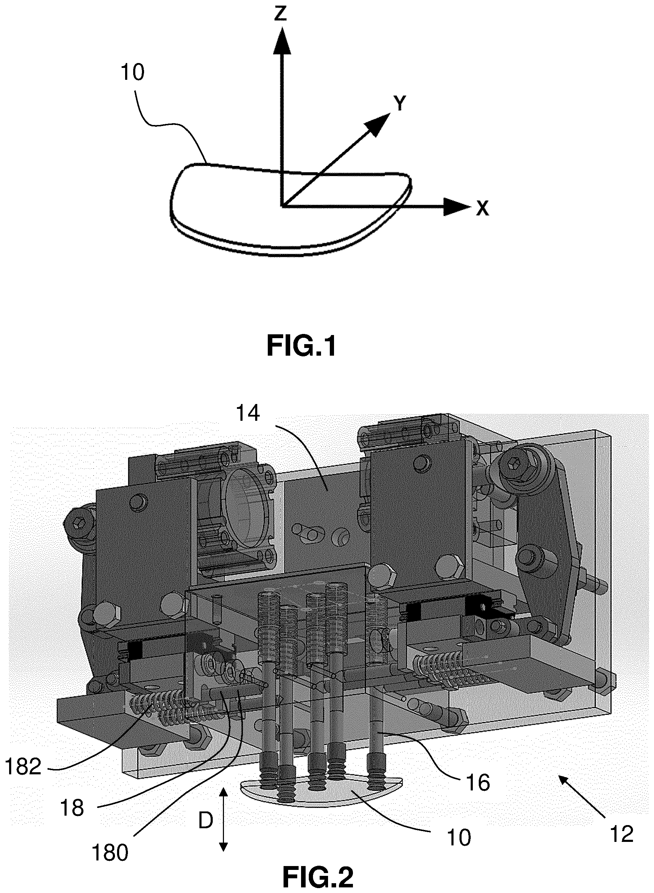

Figure 1 shows the three axes X, Y and Z of an ophthalmic lens 10 that will be referred to in the present disclosure.

The X axis is tangent to the front face of the lens 10.

The Y axis is tangent to the front face of the lens 10 and is orthogonal to the X axis.

The Z axis is normal to the front face of the lens 10 and is orthogonal to the X and Y axes.

Thus, there are six degrees of freedom for positioning the lens: translation along each of the three axes X, Y and Z and rotation around each of the three axes X, Y and Z.

In the context of performing a gluing process for example, two lenses to be assembled may be positioned in centering devices provided with movable jaws, i.e. grippers. In such conventional devices, the jaws of the grippers enable, for each of the two lenses, the positioning according to the following degrees of freedom: rotation around the Z axis, translation along the X axis and translation along the Y axis.

Besides, if the front face of the lens positioned in a gripper also rests on a concave sphere having the same nominal radius, such resting performs a positioning of the lens according to the following degrees of freedom: translation along the Z axis, rotation around the X axis and rotation around the Y axis.

Let us now consider the positioning of two ophthalmic lenses, where the first ophthalmic lens is positioned in a conventional gripper as described above, the second ophthalmic lens is positioned in another conventional gripper and a layer of adhesive is spread on the rear face of the first ophthalmic lens.

The adhesive bonding of the two ophthalmic lenses requires positioning the second ophthalmic lens with respect to the first ophthalmic lens, as follows.

A positioning step A, in translation along X and Y and in rotation around Z, is required for positioning the contours, the axes and the optical centers of the two ophthalmic lenses with respect to each other.

A positioning step B, in translation along Z, is required for defining the thickness of the adhesive layer. In the Z direction, the thickness of the adhesive layer is usually approximately 100 µm. Thus, a deviation of 1 µm on the thickness causes a variation of 1% of the volume of the adhesive layer. In order to ensure that the adhesive spreads on the whole contact surface of both lenses and without any overlapping, the tolerance on the Z positioning should be ± 2 µm.

A positioning step C, in rotation around X and Y, is required for guaranteeing parallelism between the front face of the second lens and the rear face of the first lens. Such parallelism is necessary for guaranteeing the absence of any prism and of any interference fringes.

Given all the above-mentioned requirements, a conventional positioning device, with two conventional grippers, has insufficiencies, as follows.

The lower face of a lens is to be glued on the upper face of another lens, while both lenses rest on their lower face. Thus , it is not possible to glue the two lenses by only using the two positioning grippers.

For positioning step A, the combination of the two grippers enables accurate positioning of the second lens with respect to the first lens in the X, Y axes (translation) and in the Z axis (rotation). Thus, for performing positioning step A, it is sufficient to adjust accurately the position, according to those three axes, of the second gripper with respect to the first gripper and to use a gripping device that locks those three degrees of freedom when the second lens is transferred from the second gripper to the upper face of the first lens. A conventional gripping device equipped with several suckers is suited for that purpose.

For positioning step B however, even the most accurate adjustment of the position of the two grippers according to the Z axis does not make it possible to position accurately the two surfaces to be bonded. This is because the lenses are positioned according to the Z axis by resting on their lower faces, but for the first lens, the face to be bonded is the upper face, the Z position of which may vary by several hundreds of microns as a function of the thickness tolerances. Therefore, there is a need for a device enabling the Z adjustment of the positions of the two lenses with respect to each other.

For positioning step C, the goal is to have the lower face of the second lens, in its resting state, parallel to the upper face of the first lens. However, there is a parallelism deviation that is difficult to reduce between the resting positions of the two lenses and the upper face of the first lens is not necessarily parallel to the lower face. Thus, the above-mentioned conventional grippers do not make it possible to obtain parallel positioning of the two faces to be bonded.

### SUMMARY OF THE INVENTION

An object of the present disclosure is to overcome the above-mentioned drawbacks of the prior art.

To that end, the present disclosure provides a device for manipulating at least one ophthalmic lens, wherein the device comprises:
a translational and rotational motion unit, movable in translation and in rotation according to three mutually orthogonal directions;
a chuck fixed on the translational and rotational motion unit, the chuck comprising:
   a plurality of holders movable in translation according to a direction orthogonal to a face of the at least one ophthalmic lens, at least one holder of the plurality of holders being provided with a vacuum propagating element enabling the at least one holder to grip that face of the at least one ophthalmic lens;
a plurality of holder control elements, each holder control element being adapted to either impede, or allow translation movement of a holder of the plurality of holders.

Thus, in the above-described example of gluing two lenses, the device according to the disclosure makes it possible to perform the three following functions: (i) to take the second lens in the second gripper and place it on the upper face of the first lens; (ii) to hold the position obtained in positioning step A (i.e. translations along X and Y and rotation around Z) of the second lens performed by the second gripper; and (iii) to perform positioning steps B (translation along Z) and C (rotation around X and Y) of the lower face of the second lens with respect to the upper face of the first lens.

In an embodiment, the at least one holder is a tubular rod having an end adapted to contact the above-mentioned face of said at least one ophthalmic lens, the vacuum propagating element of the at least one holder comprising a central longitudinal hole and at least one radial hole communicating with the central longitudinal hole, the tubular rod further having a tubular sucker arranged coaxially over the tubular rod and covering the end of the tubular rod and at least part of the length of the tubular rod.

In an embodiment, the end of the tubular rod is hemispherical.

In an embodiment, the tubular sucker has a bellows covering at rest the end of the tubular rod and at least part of the length of the tubular rod.

In an embodiment, each holder control element of the plurality of holder control elements comprises a push pin and a spring adapted to push the push pin against a holder of the plurality of holders for impeding translation movement of that holder, the translation movement being impeded either separately for each holder, or at the same time for all the holders of the plurality of holders.

In an embodiment, the translational and rotational motion unit has a positioning resolution of 0.125 µm and a positioning repeatability of +/-0.5 µm.

In an embodiment, the plurality of holders comprises one holder adapted to grip the geometrical center of the above-mentioned face of the at least one ophthalmic lens and four holders adapted to grip the periphery of that face of the at least one ophthalmic lens.

To the same end as mentioned above, the present disclosure also provides a method for manipulating at least one ophthalmic lens by means of a device as succinctly described above, wherein the method comprises at least the following steps:
moving the chuck in translation and in rotation according to the three mutually orthogonal directions by means of the translational and rotational motion unit until the plurality of holders is in contact with the above-mentioned face of the at least one ophthalmic lens;
gripping that face of the at least one ophthalmic lens by means of the above-mentioned at least one holder of the plurality of holders;
impeding translation movement of the plurality of holders by means of the plurality of holder control elements so as to maintain a given positioning of the at least one ophthalmic lens.

As particular features and advantages of the method are similar to those of the device, they are not repeated here.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1, already described, shows the three axes X, Y and Z of an ophthalmic lens that are referred to in the present disclosure.
FIG. 2 is a schematic view showing a device according to the present disclosure, in a particular embodiment.
FIGS. 3 and 4 are longitudinal sectional views of a holder comprised in a device according to the present disclosure, in a particular embodiment.
FIG. 5 is a pair of partial schematic sectional views of a chuck comprised in a device according to the present disclosure, in a particular embodiment.
FIGS. 6 to 12 are schematic views of a series of steps carried out in a non-limiting example of application of the method according to the present disclosure.

### DETAILED DESCRIPTION OF EMBODIMENTS

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

Figure 2 shows a particular embodiment of a device 12 according to the present disclosure for manipulating at least one ophthalmic lens 10.

The device 12 comprises a combination of two mechanical elements that are complementary: a translational and rotational motion unit (not shown) that is movable in translation and in rotation according to the three mutually orthogonal directions X, Y and Z shown in Figure 1 described previously, and a chuck 14 that is fixed on the translational and rotational motion unit.

The translational and rotational motion unit may for example comprise a servomotor having an encoder with 4000 points per revolution, a reduction gear 1:10 and a ball screw spindle having a 5 mm step. Thus, for ten motor revolutions, i.e. 40000 encoder points, the screw moves the chuck 14 by 5 mm. Therefore, there are eight encoder points per micron, hence a resolution of 0.125 µm. The ball screw spindle may be prestressed for eliminating play.

In a particular embodiment, the translational and rotational motion unit has a positioning resolution of 0.125 µm and a positioning repeatability of +/-0.5 µm.

The gripping technique implemented by the chuck 14 for gripping the lens 10 uses vacuum.

The chuck 14 comprises one or more holders 16. The holders 16 are movable in translation according to a direction D orthogonal to a face of the lens 10.

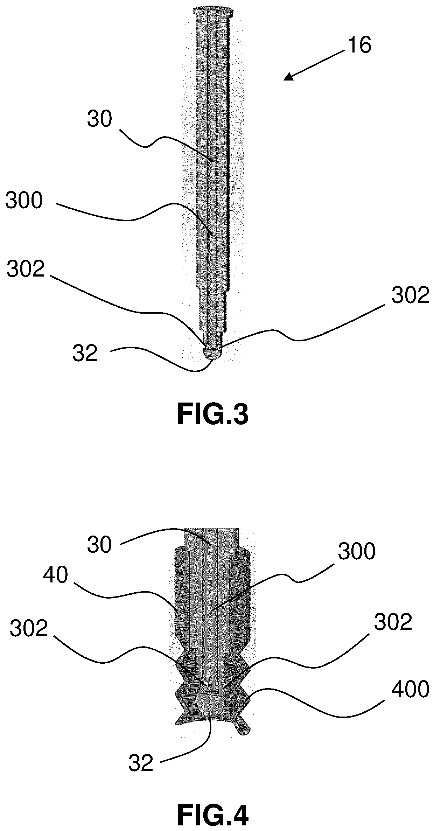

As shown in Figure 3, at least one holder 16 is provided with a vacuum propagating element 30 enabling that holder 16 to grip the above-mentioned face of the lens 10.

In the particular embodiment of Figure 2, the plurality of holders 16 comprises one holder adapted to grip the geometrical center of the above-mentioned face of the lens 10 and four holders adapted to grip the periphery of that face of the lens 10.

It should be noted that, in case there is only one holder 16, it is not necessarily positioned at the exact geometrical center of the face of the lens 10, but may be close thereto.

In the particular embodiment of Figures 3 and 4, the holder 16 is a tubular rod having an end 32 adapted to contact the above-mentioned face of the lens 10.

By way of non-limiting example, the end 32 of the tubular rod may be hemispherical as in the illustrated embodiment.

In the illustrated embodiment, the vacuum propagating element 30 of the holder 16 comprises a central longitudinal hole 300 and at least one radial hole 302 communicating with the central longitudinal hole 300, the holes being provided for enabling connection to a vacuum source (not shown). In the particular embodiment of Figures 3 and 4, the holder 16 comprises two radial holes 302.

As shown in Figure 4, the tubular rod further has a tubular sucker 40. The tubular sucker 40 is arranged coaxially over the tubular rod and covers the end 32 of the tubular rod and at least part of the length of the tubular rod.

In the particular embodiment of Figure 4, the tubular sucker 40 has a bellows 400 that covers, at rest (as shown), the end 32 of the tubular rod and at least part of the length of the tubular rod. On the other hand, when the holder 16 contacts a surface, e.g. the surface of the lens 10, the bellows 400 falls back and sticks the surface against the end 32 of the holder 16, so that the end 32 of the holder 16 presses against the surface of the lens 10. Such contacting enables accurate Z positioning when the holder 16 is locked and the reaction against the holder 16 impedes by friction any sliding movement in a plane orthogonal to the holder 16, which makes it possible to hold positioning A described above.

Besides, the position of the holder 16 in the center of the bellows 400 makes it possible to significantly reduce the deformations of the lens 10 caused by the suction by the bellows 400, especially when the lens is very thin. It is to be noted that the lesser the diameter where the suction is applied, the lesser the lens deformations.

As shown in Figure 2, the chuck 14 further comprises a plurality of holder control elements 18. Each holder control element 18 is adapted to either impede, or allow translation movement of a holder of the plurality of holders 16.

Each holder control element 18 comprises a push pin 180 and a spring 182 adapted to push the push pin 180 against a holder of the plurality of holders 16 for impeding translation movement, according to the direction D, of that holder.

The translation movement may be impeded either separately for each holder, or at the same time for all the holders of the plurality of holders 16.

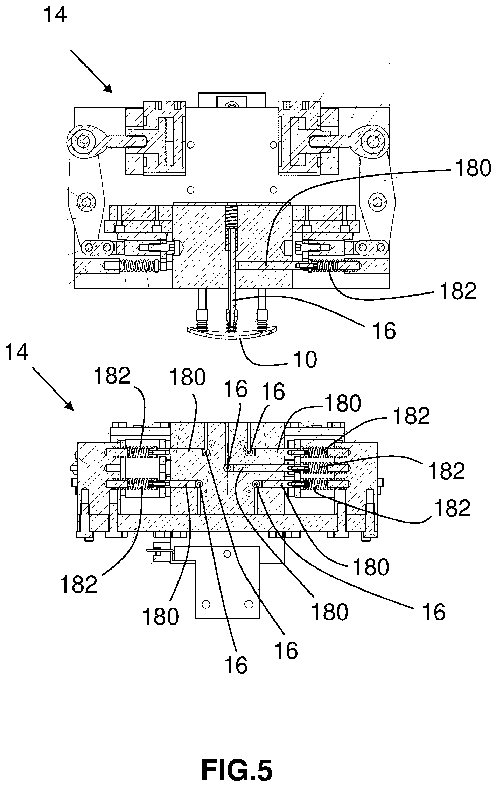

The two partial sectional views of Figure 5 show the locking and unlocking mechanism of the holders 16 in the chuck 14, by means of the holder control elements 18. The view shown in the upper part of Figure 5 is a sectional view in a plane parallel to the direction D and the view in the lower part of Figure 5 is a sectional view in the plane of the push pins 180.

The view shown in the upper part of Figure 5 shows that one spring 182 and one corresponding push pin 180 are associated with one holder 16. The holder 16 is free to move and is pushed downwards by the spring 182.

As a variant, for pushing the holders 16 downwards, the holders 16 may be weighted, for example by brass weights.

As shown by the view in the lower part of Figure 5, at rest, each push pin 180 is pushed individually against its associated holder 16 by the corresponding spring 182 and the holders are locked (on the left of the view). For unlocking the holders 16, two cylinders (not shown) that are automatically controlled by the device 12 make the push pins 180 move backwards and compress the corresponding springs 182 (on the right of the view). The holders 16 are then free to move in translation along the Z axis (i.e. direction D) and in rotation with a small amplitude around the X and Y axes, without losing their positioning in X and Y translation and in Z rotation.

Vents are provided for evacuating the air present in the guiding holes of the push pins 180.

The device may be adapted to any surface of lens.

The method according to the present disclosure, for manipulating at least one ophthalmic lens 10 by means of the device 12, comprises at least the following steps.

The chuck 14 is first moved in translation and in rotation according to the X, Y and Z axes by means of the translational and rotational motion unit, until the plurality of holders 16 is in contact with the above-mentioned face of the lens 10.

Then, that face of the lens 10 is gripped by means of the at least one holder that is provided with the vacuum propagating element 30.

Next, translation movement of the plurality of holders 16 is impeded by means of the plurality of holder control elements 18, so as to maintain a given positioning of the lens 10.

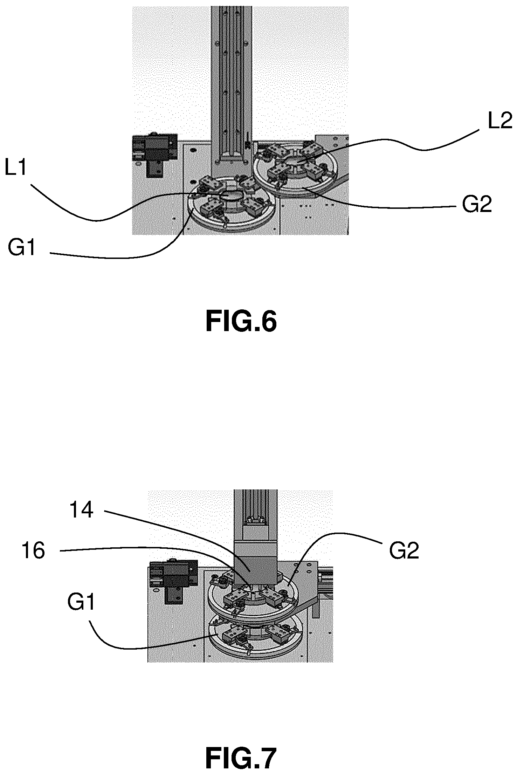

A non-limiting example of the method is now described with reference to Figures 6 to 12 in an embodiment where two lenses are to be glued together.

In the initial state shown in Figure 6, the first lens L1 and the second lens L2 are positioned in their respective grippers G1 and G2. The chuck 14 is in an upper position.

Then, at step 1 (not shown), the gripper G2 containing the second lens L2 is translated above the first lens L1 and positions the second lens L2 in its gluing position, in translation according to X and Y and in rotation around Z.

Then, at step 2 shown in Figure 7, the chuck 14 moves downwards until the free holders 16 are in contact with the surface of the second lens L2. The tubular suckers 40 grip the second lens L2.

Then, at step 3 (not shown), the second gripper G2 opens to free the second lens L2. The chuck 14 moves upwards with the second lens L2. The holders 16 are left free.

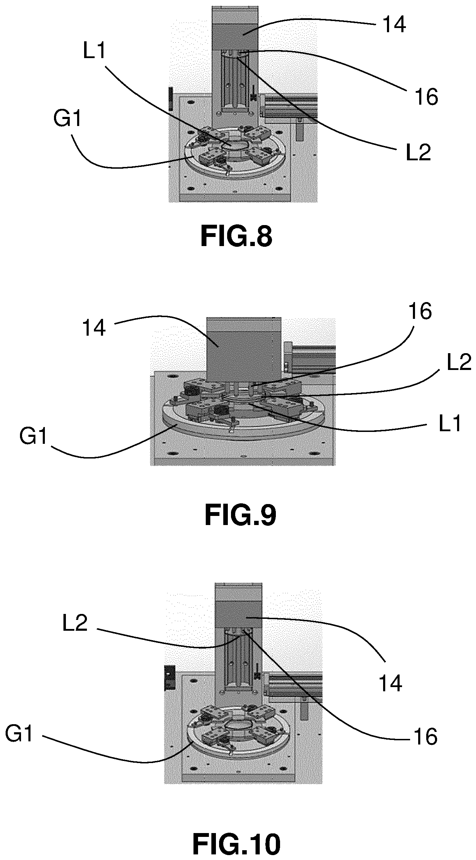

Then, at step 4 shown in Figure 8, the second gripper G2 is moved to the bottom of the device 12, so that only the first gripper G1 is visible on the drawing.

Then, at step 5 shown in Figure 9, the chuck 14 moves downwards until the second lens L2 is placed on the first lens L1. The Z movement of the holders 16 makes it possible for the lower face of the second lens L2 to perfectly stick to the upper face of the first lens L1. Thus, the second lens L2 is positioned in rotation around X and Y and in translation along Z. When the downwards movement of the chuck 14 ends, the holders 16 are locked for keeping such positioning.

Then, at step 6 shown in Figure 10, the chuck 14 moves upwards again for clearing the upper face of the first lens L1.

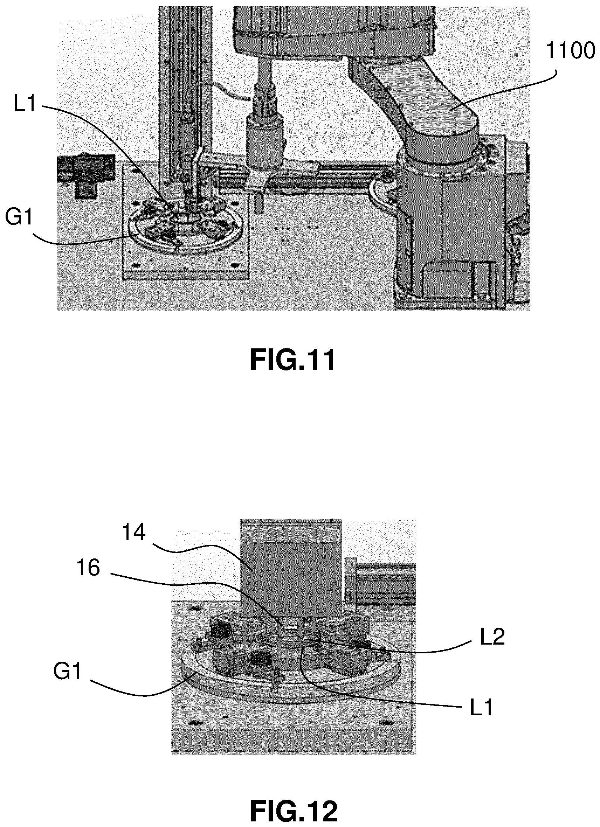

Then, at step 7 shown in Figure 11, an adhesive substance is spread on the upper face of the first lens L1 by means of a gluing machine 1100.

Last, in step 8 shown in Figure 12, the chuck 14 moves downwards and positions the lower face of the second lens L2 in its gluing position. Thanks to the "face on face" positioning carried out at step 5 and to the locking of the holders 16 which kept such positioning, the faces of the lenses L1, L2 to be glued are perfectly parallel to one another and the distance therebetween is controlled by the translational and rotational motion unit with a precision of +/- 0.5 mm. The distance between the faces of the two lenses L1, L2 equals the thickness of the layer of adhesive substance.

As a variant, step 7 may be carried out after steps 1 to 4. Next, the chuck 14 moves downwards, until the second lens L2 is placed on the first lens L1. The Z movement of the holders 16 makes it possible for the lower face of the second lens L2 to be glued on the upper face of the first lens L1.

Optionally, the position of the second lens L2 with respect to the first lens L1 may be measured in real time, so that the gluing position may also be measured and possibly stored, which makes it possible to improve monitoring of the process.

Although representative methods and devices have been described in detail herein, those skilled in the art will recognize that various substitutions and modifications may be made without departing from the scope of what is described and defined by the appended claims.

## Claims

1. A device (12) for manipulating at least one ophthalmic lens (10), wherein said device (12) comprises:
a translational and rotational motion unit, movable in translation and in rotation according to three mutually orthogonal directions (X, Y Z);
a chuck (14) fixed on said translational and rotational motion unit, said chuck (14) comprising:
a plurality of holders (16) movable in translation according to a direction (D) orthogonal to a face of said at least one ophthalmic lens (10), at least one holder of said plurality of holders (16) being provided with a vacuum propagating element (30) enabling said at least one holder to grip said face of said at least one ophthalmic lens (10);
a plurality of holder control elements (18), each holder control element (18) being adapted to either impede, or allow translation movement of a holder of said plurality of holders (16).

2. A device (12) according to claim 1, wherein said at least one holder is a tubular rod having an end (32) adapted to contact said face of said at least one ophthalmic lens (10), said vacuum propagating element (30) of said at least one holder comprising a central longitudinal hole (300) and at least one radial hole (302) communicating with said central longitudinal hole (300), said tubular rod further having a tubular sucker (40) arranged coaxially over said tubular rod and covering said end (32) of said tubular rod and at least part of the length of said tubular rod.

3. A device (12) according to claim 2, wherein said end (32) of said tubular rod is hemispherical.

4. A device (12) according to claim 2 or 3, wherein said tubular sucker (40) has a bellows (400) covering at rest said end (32) of said tubular rod and at least part of the length of said tubular rod.

5. A device (12) according to any of the preceding claims, wherein each holder control element (18) of said plurality of holder control elements (18) comprises a push pin and a spring adapted to push said push pin against a holder of said plurality of holders (16) for impeding translation movement of said holder, said translation movement being impeded either separately for each holder, or at the same time for all the holders of said plurality of holders (16).

6. A device (12) according to any of the preceding claims, wherein said translational and rotational motion unit has a positioning resolution of 0.125 µm and a positioning repeatability of +/-0.5 µm.

7. A device (12) according to any of the preceding claims, wherein said plurality of holders (16) comprises one holder adapted to grip the geometrical center of said face of said at least one ophthalmic lens (10) and four holders adapted to grip the periphery of said face of said at least one ophthalmic lens (10).

8. A method for manipulating at least one ophthalmic lens (10) by means of a device (12) according to any of the preceding claims, wherein said method comprises at least the following steps:
moving said chuck (14) in translation and in rotation according to said three mutually orthogonal directions (X, Y, Z) by means of said translational and rotational motion unit until said plurality of holders (16) is in contact with said face of said at least one ophthalmic lens (10);
gripping said face of said at least one ophthalmic lens (10) by means of said at least one holder of said plurality of holders (16);
impeding translation movement of said plurality of holders (16) by means of said plurality of holder control elements (18) so as to maintain a given positioning of said at least one ophthalmic lens (10).
